# EUROPEAN PATENT SPECIFICATION

(11) **EP 2 579 142 B1**
(45) Date of publication and mention of the grant of the patent: **12.11.2014**
(21) Application number: 12168444.3
(22) Date of filing: 17.05.2012
(51) Int. Cl.: G06F 3/048

(54) **Mobile device and method of remotely controlling a controlled device**
Mobile Vorrichtung und Verfahren zur Fernsteuerung einer gesteuerten Vorrichtung
Dispositif mobile et procédé de commande à distance d'un dispositif commandé

(30) Priority: 06.10.2011 KR 20110101826
(43) Date of publication of application: 10.04.2013
(73) Proprietor: Samsung Electronics Co., Ltd., Suwon-si, Gyeonggi-do, 443-742 (KR)
(72) Inventor: Ryu, So-hyun, Gyeonggi-do (KR)
(74) Representative: Robinson, Ian Michael

(56) References cited:
- US-A1- 2011 138 416

## Description

### BACKGROUND

### Field

Apparatuses and methods consistent with the exemplary embodiments relate to a mobile device and a control method thereof. More particularly, the exemplary embodiments relate to a mobile device and a control method thereof which is capable of communicating with a display apparatus displaying a user interface (UI) on a screen.

### Description of the Related Art

A display apparatus such as a TV, a PC or an AV system, which displays an image thereon may display a user interface (UI) on a screen and operate according to a user command that is received through the UI. The UI may be remotely manipulated by a remote controller or may include a touchable UI which is touched by a user for a more useful manipulation.

When a user is close to a display apparatus, he/she may touch the UI. However, in a distant place, he/she may not use the touchable UI. Accordingly, due to the distance restriction, the touchable UI has not been used to control a controlled device such as a display apparatus targeted in a remote location, until now.

Wide-spread use of mobile devices such as mobile phones, smart phones and smart pads increases utilization of the mobile devices. The mobile devices have various functions including communicating with a display apparatus and transmitting and receiving data to/from the display apparatus. The mobile devices may include a camera which captures an image and a display unit which displays the captured image thereon. A mobile device according to the preamble of claim 1 is disclosed in US-A-2011/0138416.

### SUMMARY

According to the present invention there is provided an apparatus and method as set forth in the appended claims. Other features of the invention will be apparent from the dependent claims, and the description which follows. One or more exemplary embodiments provide a mobile device and a control method thereof which more conveniently remotely controls a controlled device.

Further, one or more exemplary embodiments provide a mobile device and a control method thereof which enables a touchable interaction with a user interface (UI) provided by a controlled device.

The foregoing and/or other aspects may be achieved by providing a mobile device including: a communication unit which communicates with a controlled device that displays a screen; a camera which captures an image of the screen of the controlled device; a display unit which displays an image taken from the screen of the controlled device; a touch input unit which receives a user's touch input to the display unit; and a controller which determines an area of the screen of the controlled device from the taken image, and transmits to the controlled device location information which corresponds to the user's touch input to an area of the screen.

The controller may determine an area of the screen based upon a marker which is provided in the controlled device.

The controller may determine an area of the screen by performing an image recognition with respect to the taken image.

The communication unit may receive a sync signal from the controlled device, and the controller may determine an area of the screen based on a relative location of the controlled device, by using the received sync signal.

The location information which corresponds to the user's touch input may include coordinate information of a place which corresponds to the user's touch input with respect to a predetermined reference place of an area of the screen.

The controller may display on the display unit a UI which identifies a location which corresponds to the user's touch input.

The controller may adjust at least one of an angle and a zoom of the camera to display an area of the screen, when an image is taken from the screen.

The foregoing and/or other aspects may be achieved by providing a method of controlling a mobile device, the control method including: capturing with a camera, an image of a screen of a controlled device which displays the image on the screen; displaying on a display unit the image taken from the screen of the controlled device; receiving a user's touch input on the display unit; and determining an area of the screen of the controlled device from the taken image, and transmitting to the controlled device location information which corresponds to the user's touch input to an area of the screen.

The determining may include determining an area of the screen based upon a marker which is provided in the controlled device.

The determining may include determining an area of the screen by performing an image recognition with respect to the captured image.

The determining may include determining an area of the screen based on a relative location of the controlled device by using a sync signal received from the controlled device.

The location information which corresponds to the user's touch input may include coordinate information of a location which corresponds to the user's touch input to a predetermined reference place of an area of the screen.

The control method may further include displaying on the display unit, a UI which identifies a location which corresponds to the user's touch input.

The capturing of the image may include adjusting at least one of an angle and a zoom of the camera to display an area of the screen.

Another aspect of the inventive concept may provide a mobile device including a camera which captures an image of a screen of a controlled device, a display unit which displays the captured image, an input unit which receives a user's input to the display unit, and a controller which determines an area of the screen of the controlled device from the captured image, and transmits to the controlled device the location information which corresponds to the user's input.

A further aspect of the inventive concept may provide a method of controlling a mobile device, the method including capturing with a camera an image of a screen of a controlled device displaying on a display unit the captured image, receiving a user's input to the display unit, and determining an area of the screen of the controlled device and transmitting to the controlled device the location the information which corresponds to the user's input to the area of the screen.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 illustrates a controlled device and a mobile device according to an exemplary embodiment of the present inventive concept;
FIG. 2 is a block diagram of the mobile device of FIG. 1;
FIG. 3 is a flowchart of a method of controlling the mobile device of FIGS. 1 and 2;
FIG. 4 illustrates a controlled device which displays a user interface (UI) on a screen and a mobile device which displays thereon an image taken from the screen;
FIG. 5 illustrates an area of a screen of the controlled device that is displayed in the mobile device;
FIG. 6 illustrates another example of a controlled device which displays a UI on a screen and a mobile device which displays thereon an image taken from the screen; and
FIG. 7 illustrates a controlled device which receives location information from the mobile device and displays a UI on a screen.

### DETAILED DESCRIPTION OF EXEMPLARY EMBODIMENTS

Below, exemplary embodiments will be described in detail with reference to accompanying drawings so as to be easily understood by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

Hereinafter, an exemplary embodiment of the present inventive concept will be described in detail.

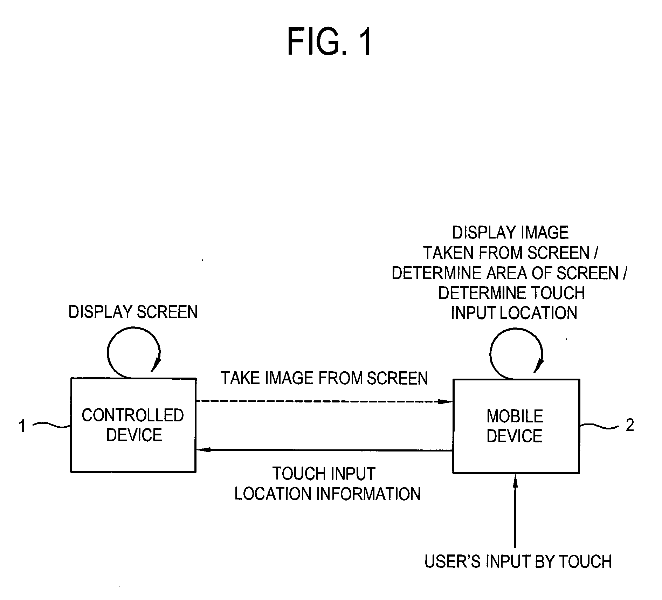

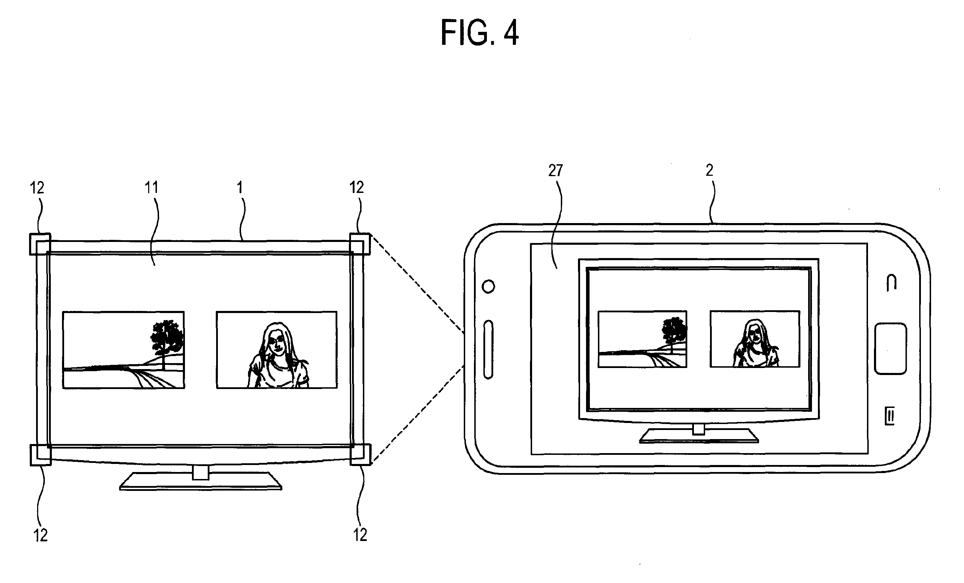

FIG. 1 illustrates a controlled device and a mobile device according to an exemplary embodiment of the present inventive concept. The controlled device 1 may include a display apparatus which displays an image thereon such as a TV, a PC or an AV system. The controlled device 1 operates according to user commands and displays a user interface (UI) on a screen to receive a user's command (refer to reference numeral 11 in FIG. 4).

The mobile device 2 may include a mobile phone, a smart phone or a smart pad. The mobile device 2 provides an image-taking function, a touch input function and a communication function. The mobile device 2 provides a user with an image 27 (refer to FIG. 4) which is taken from a screen 11 of a controlled device 1, which displays a UI. A user touches the UI of the screen 11 of the controlled device 1 by touching the image displayed on the mobile device 2. The mobile device 2 correlates a touched location of the UI of the screen 11 of the controlled device 1, and transmits the location information to the controlled device 1. The controlled device 1 identifies a user's command based on the information on the touched location transmitted by the mobile device 2, and performs an operation according to the transmitted information.

As above, according to an exemplary embodiment of the present inventive concept, a user may control the controlled device 1 by touching the UI of the controlled device 1 through the use of the mobile device 2 and control the controlled device 1 which is at a remote place without limitation as to the distance between the controlled device 1 and a user, to thereby ensure user convenience.

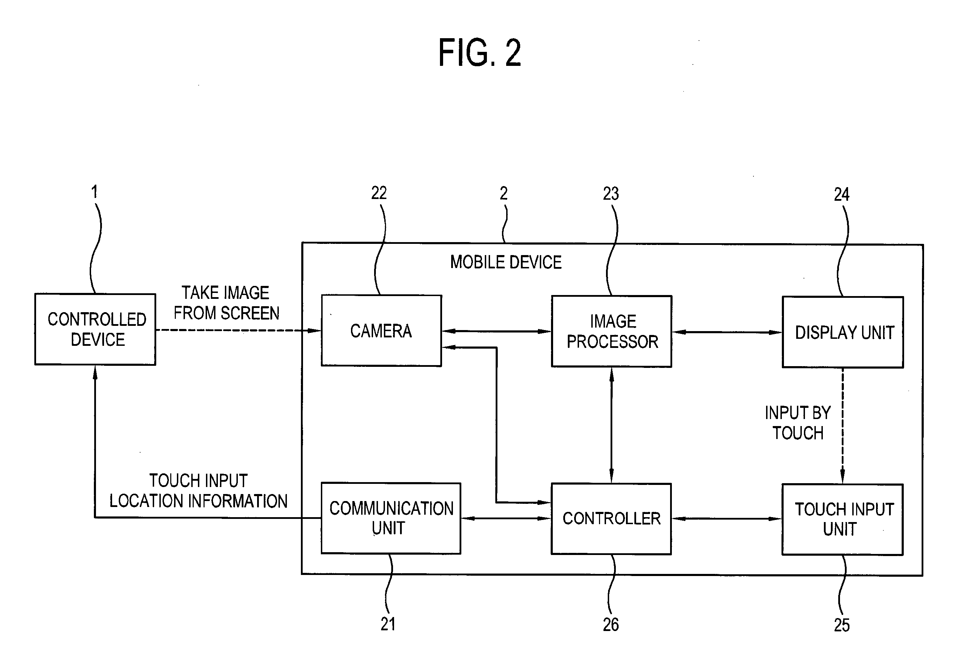

FIG. 2 is a block diagram of the mobile device 2 which is shown in FIG. 1. As shown therein, the mobile device 2 includes a communication unit 21, a camera 22, an image processor 23, a display unit 24, a touch input unit 25 and a controller 26.

The communication unit 21 communicates with the controlled device 1. The communication unit 21 transmits to the controlled device 1 location information relating to a user's touch input. Communication between the communication unit 21 and the controlled device 1 varies, including both wired and wireless communications.

The camera 22 captures an image of the screen 11 of the controlled device 1.

The image processor 23 processes an image 27 of the screen 11 of the controlled device 1 that is taken by the camera 22, to display the image 27 on the display unit 24.

The display unit 24 displays thereon the image 27 of the screen 11 of the controlled device 1 that is processed by the image processor 23. The display unit 24 can vary by including a liquid crystal display (LCD) and an organic light emitting diode (OLED).

The touch input unit 25 receives a user's touch input to the display unit 25, which displays thereon the image 27 of the screen 11 of the controlled device 1. The user's touch input varies and can include tapping, multi-tapping, dragging, sliding, and making a gesture.

The controller 26 performs an overall control operation for the mobile device 2. The controller 26 controls the camera 22 to capture an image according to a user command. The controller 26 controls the image processor 23 to display the image 27 of the screen 11 of the controlled device 1 that is captured by the camera, on the display unit 24. Upon receiving a user's touch input through the touch input unit 25, the controller 26 controls identification of location information of the touch input and controls transmission of the identified location information to the controlled device 1, through the communication unit 21.

The controller 26 may include a control program to perform the control operations, a nonvolatile memory (not shown) which stores therein the control program to perform the control operations, a volatile memory (not shown) which loads at least a part of the stored control program, and a microprocessor (not shown) which executes the loaded control program.

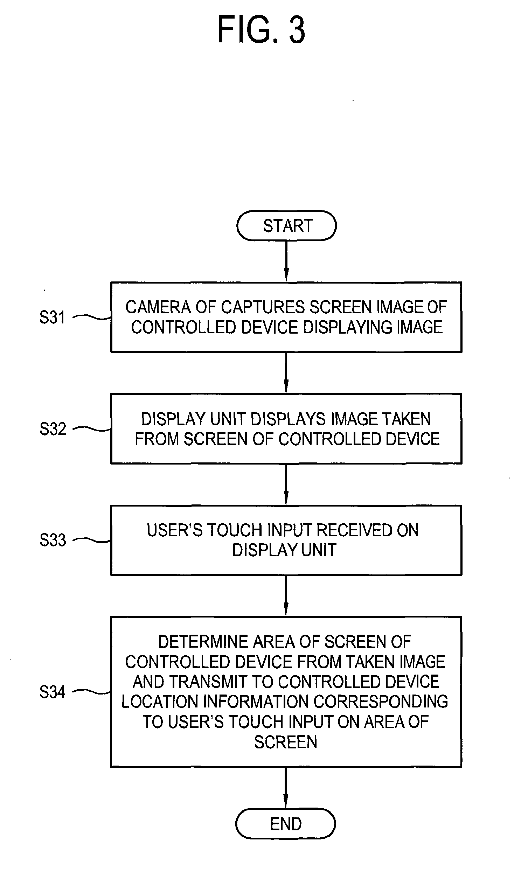

FIG. 3 is a flowchart of a control method of the mobile device 2 which is shown in FIGS. 1 and 2. FIG. 4 illustrates the controlled device 1 which displays a UI on the screen 11, and the mobile device 2 which displays thereon the image 27 that is taken from the screen 11.

Referring to FIGS. 3 and 4, the mobile device 2 uses camera 21 (S31) to capture an image of the screen 11 of the controlled device 1 that displays a UI. Capturing the image of the screen 11 of the controlled device 1 may be performed according to a user command. For example, a user may adjust a focus of the camera 22 of the mobile device 2 which corresponds to the screen 11 of the controlled device 1, operate a shutter and take an image of the screen 11. Otherwise, taking the image of the screen 11 of the controlled device 1 may be performed automatically. For example, the controller 26 may identify whether the focus of the camera 21 corresponds to the screen 11 of the controlled device 1 and capture an image automatically if the focus corresponds to the screen 11. The determination of whether the focus of the camera 21 corresponds to the screen 11 of the controlled device 1 will be described later, in more detail. The focus of the camera 21 may be adjusted by a control of the controller 26. For example, the camera 21 may be shifted a predetermined distance or turned at a predetermined angle with respect to a main body of the mobile device 2. The camera 21 may zoom in or zoom out according to a control of the controller 26.

The mobile device 2 displays on the display unit 24 the image 27 which is taken from the screen 11 of the controlled device 1 (S32).

The mobile device 2 receives a user touch input to the display unit 24 through the touch input unit 25 (S33).

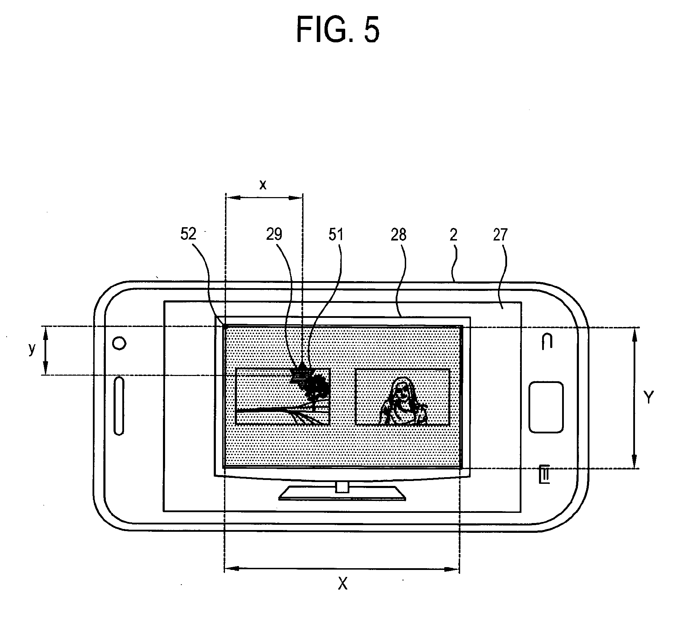

The mobile device 2 determines an area 28 (refer to FIG. 5) of the screen 11 of the controlled device 1 from the image 27 that is taken, identifies the location which corresponds to the user's touch input to an area 28 of the screen 11 of the controlled device 1, and transmits the location information to the controlled device 1.

An area 28 of the screen 11 of the controlled device 1 from the taken image 27 may be determined by using one of various methods. For example, an area 28 of the screen 11 of the controlled device 1 may be determined on the basis of a marker 12 (refer to FIG. 4) which is provided in the controlled device 1. The marker 12 may include an infrared reflection sheet. In this case, the mobile device 2 may further include an infrared sensor (not shown). The controller 26 may detect infrared rays that are reflected by the marker 12 through the infrared sensor and identify an area 28 of the screen 11 of the controlled device 1. The marker 12 may be provided in a location at which it is easy to identify an area 28 of the screen 11 of the controlled device 1. For example, the marker 12 may be provided in each of four edges of a rectangular screen 11 of the controlled device 1. The shape and location of the marker 12 shown in FIG. 4 is an example that is provided for purposes of convenience. Embodiments of the marker 12 may be different and may vary as would be understood by someone with ordinary knowledge of the art.

As described above, determining whether the focus of the camera 22 corresponds to the screen 11 of the controlled device 1 may be performed by detecting infrared rays reflected by the marker 12. If the focus of the camera 22 does not correspond to the screen 11 of the controlled device 1, the controller 26 may adjust the focus of the camera 22, e.g., adjust angle or a zoom of the camera 22 to ensure correspondence therebetween. The image 27 in FIG. 4 is an example of an optimum focus of the camera 22, and at that timing, the entire area 28 of the screen 11 of the controlled device 1 is displayed on the display unit 24.

Determination on an area 28 of the screen 11 of the controlled device 1 may vary including using the marker 12 as above. For example, the determination on an area 28 of the screen 11 of the controlled device 1 may be performed by image recognition of the image 27 that is captured. That is, a predetermined image recognition algorithm may be applied to determine an area 28 which is determined as the screen 11 of the controlled device 1, in connection with the captured image 27. The image recognition may include, e.g., an edge detection. Determination on an area 28 of the screen 11 of the controlled device 1 may be otherwise performed as follows: a sync signal is received at a predetermined interval from the controlled device 1. A relative location of the controlled device 1 with respect to the mobile device 2 is identified by using the received sync signal. The identified relative location is used to determine an area 28 of the screen 1.

If the user's touch input to an area 28 of the screen 11 of the controlled device 1 is received, the mobile device 2 identifies the location which corresponds to the user's touch input to an area 28 of the screen 11 of the controlled device 1. FIG. 5 illustrates an area 28 of the screen 11 of the controlled device 1 displayed on the mobile device 1. Presumably, a user has touched a place or point 29 of an area 28 of the screen 11 shown in FIG. 5. The mobile device 2 determines a coordinate of the point 29 corresponding to the user's touch input to an area 28 of the screen 11. The mobile device 2 may determine coordinates x and y of the point 29 which corresponds to the user's touch input based on an upper left edge 52 of the screen 11. The coordinates x and y of the point 29 which corresponds to the user's touch input may be determined in proportion to the size X and Y of an area 28 of the screen 11. The mobile device 2 transmits to the controlled device 1 coordinate information x, y, X and Y of the point 29 which corresponds to the determined user's touch input. The controlled device 1 performs a predetermined operation based on the received coordinate information x, y, X and Y of the point 29 which corresponds to the user's touch input. For example, as shown in FIG. 5, the controlled device 1 may determine that one of images displayed on the screen 11 has been selected as corresponding to the user's touch input.

Upon a user's touch input to an area 28 of the screen 11 of the controlled device 1, the mobile device 2 may display a UI 51 which identifies a touched location. Otherwise, upon a user's touch input by touch to an area 28 of the screen 11 of the controlled device 1, the mobile device 2 may respond through vibration to notify the validity of the user's touch.

According to the exemplary embodiment of the present inventive concept, a user may touch the virtual screen 11 of the controlled device 1 which is displayed through the image 27 of the mobile device 2 and may control the controlled device 1 in a remote location to thereby be provided with a convenient and intuitive user environment, as if a user were touching the screen 11 of the controlled device 1.

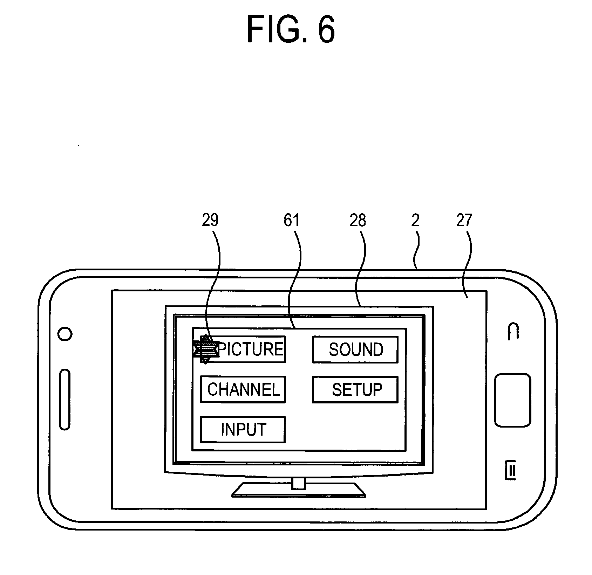

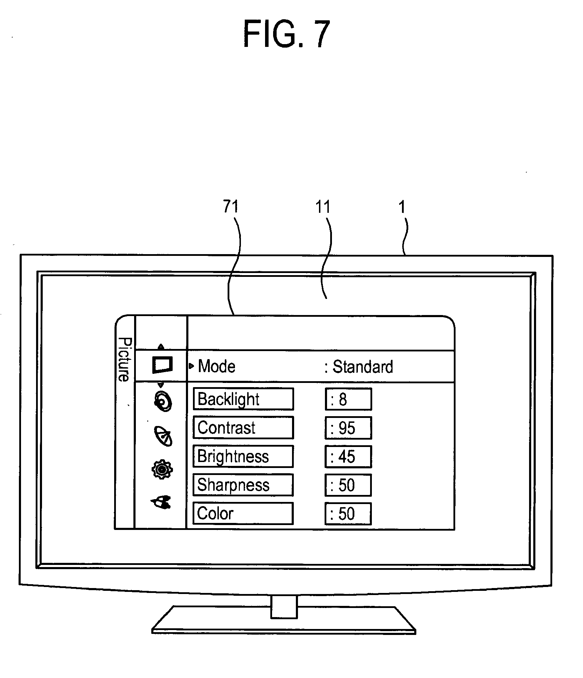

FIG. 6 illustrates another example of the controlled device 1 which displays a UI on the screen 11 and the mobile device 2 which displays an image taken from the screen 11. As shown therein, a UI 61 which corresponds to a TV menu is displayed on the screen 11 of the controlled device 1. The menu UI 61 may include, e.g., picture, sound, channel, setup and input items. A user may touch one of the items of the UI 61 from an area 28 of the screen 11 of the controlled device 1 displayed as the image 27 captured by the mobile device 2. For example, as shown in FIG. 6, a user may touch the picture item. The mobile device 2 then transmits to the controlled device 1 the coordinate information x, y, X and Y of the point 29 which corresponds to a user's touch input. The controlled device 1 determines that the picture item has been selected from items of the UI 61, based on the coordinate information x, y, X and Y of the point 29 which corresponds to the user's touch input. Then, the controlled device 1 displays a submenu UI corresponding to the picture item. FIG. 7 illustrates an example of the submenu UI 71 which corresponds to the picture item that is displayed on the screen 11 of the controlled device 1.

As described above, a mobile device and a control method thereof according to the present inventive concept enables a user's touch interaction with a UI provided by a controlled device through a mobile device, and enables a user to more conveniently remotely control the controlled device.

## Claims

1. A mobile device comprising:
a communication unit which communicates with a controlled device having a screen that displays an image;
a camera which captures an image of the screen of the controlled device;
a display unit which displays said image captured from the screen of the controlled device;
a touch input unit which receives a user's touch input onto the display unit; and
a controller which determines an area of the screen of the controlled device from said captured image, the mobile device being **characterized in that** said controller transmits to the controlled device the location information on said screen which corresponds to the user's touch input onto the area of the screen displayed on said display unit.

2. The mobile device according to claim 1, wherein the controller determines the area of the screen based on a marker which is provided in the controlled device.

3. The mobile device according to claim 1 or 2, wherein the controller determines the area of the screen by performing an image recognition with respect to the captured image.

4. The mobile device according to one of claims 1 to 3, wherein the communication unit receives a sync signal from the controlled device, and the controller uses the received sync signal to determine the area of the screen based on a relative location of the controlled device.

5. The mobile device according to one of claims 1 to 4, wherein the location information which corresponds to the user's touch input comprises coordinate information of a location which corresponds to the user's touch input with respect to a predetermined reference place in the area of the screen.

6. The mobile device according to one of claims 1 to 5, wherein the controller displays a user interface (UI) on the display unit which identifies a location which corresponds to the user's touch input.

7. The mobile device according to one of claims 1 to 6, wherein the controller adjusts at least one of an angle and a zoom of the camera to display the area of the screen when an image is captured from the screen.

8. A method of controlling a mobile device, the control method comprising:
capturing an image with a camera of a screen of a controlled device having a screen which displays an image;
displaying on a display unit of said mobile device the image captured from the screen of the controlled device;
receiving a user's touch input onto said display unit; and
determining an area of the screen of the controlled device from said captured image, the method being **characterized by** the step of: transmitting to the controlled device location information which corresponds to the user's touch input onto the area of the screen displayed on said display unit.

9. The control method according to claim 8, wherein the determining comprises determining the area of the screen based on a marker which is provided in the controlled device.

10. The control method according to claim 8 or 9, wherein the determining comprises determining the area of the screen by performing an image recognition with respect to the captured image.

11. The control method according to one of claims 8 to 10, wherein the determining comprises determining the area of the screen based on a relative location of the controlled device by using a sync signal received from the controlled device.

12. The control method according to one of claims 8 to 11, wherein the location information which corresponds to the user's touch input comprises coordinate information of a location which corresponds to the user's touch input to a predetermined reference place of the area in the screen.

13. The control method according to one of claims 8 to 12, further comprising displaying a user interface (UI) on the display unit which identifies a location which corresponds to the user's touch input.

14. The control method according to one of claims 8 to 13, wherein the capturing the image comprises adjusting at least one of an angle and a zoom of the camera to display the area of the screen.

## Patentansprüche

1. Mobilvorrichtung, die Folgendes umfasst:
eine Kommunikationseinheit, die mit einer gesteuerten Vorrichtung, die einen Bildschirm besitzt, der ein Bild anzeigt, kommuniziert;
eine Kamera, die ein Bild von dem Bildschirm der gesteuerten Vorrichtung aufnimmt;
eine Anzeigeeinheit, die das von dem Bildschirm der gesteuerten Vorrichtung aufgenommene Bild anzeigt;
eine Berührungseingabeeinheit, die eine Berührungseingabe eines Anwenders auf der Anzeigeeinheit empfängt; und
eine Steuereinheit, die einen Bereich des Bildschirms der gesteuerten Vorrichtung aus dem aufgenommenen Bild bestimmt, wobei die Mobilvorrichtung **dadurch gekennzeichnet ist, dass** die Steuereinheit zu der gesteuerten Vorrichtung die Ortsinformationen auf dem Bildschirm, die der Berührungseingabe des Anwenders auf dem auf der Anzeigeeinheit angezeigten Bereich des Bildschirms entsprechen, sendet.

2. Mobilvorrichtung nach Anspruch 1, wobei die Steuereinheit den Bereich des Bildschirms anhand einer Markierung, die in der gesteuerten Vorrichtung bereitgestellt wird, bestimmt.

3. Mobilvorrichtung nach Anspruch 1 oder 2, wobei die Steuereinheit den Bereich des Bildschirms durch Ausführen einer Bilderkennung in Bezug auf das aufgenommene Bild bestimmt.

4. Mobilvorrichtung nach einem der Ansprüche 1 bis 3, wobei die Kommunikationseinheit von der gesteuerten Vorrichtung ein Synchronisationssignal empfängt und die Steuereinheit das empfangene Synchronisationssignal verwendet, um den Bereich des Bildschirms anhand eines relativen Ortes der gesteuerten Vorrichtung zu bestimmen.

5. Mobilvorrichtung nach einem der Ansprüche 1 bis 4, wobei die Ortsinformationen, die der Berührungseingabe des Anwenders entsprechen, Koordinateninformationen eines Ortes, der der Berührungseingabe des Anwenders in Bezug auf eine vorgegebene Referenzstelle in dem Bereich des Bildschirms entsprechen, enthalten.

6. Mobilvorrichtung nach einem der Ansprüche 1 bis 5, wobei die Steuereinheit eine Anwenderschnittstelle (UI) auf der Anzeigeeinheit, die einen Ort identifiziert, der der Berührungseingabe des Anwenders entspricht, anzeigt.

7. Mobilvorrichtung nach einem der Ansprüche 1 bis 6, wobei die Steuereinheit einen Winkel und/oder Zoom der Kamera einstellt, um den bereich des Bildschirms anzuzeigen, wenn ein Bild von dem Bildschirm aufgenommen wird.

8. Verfahren zum Steuern einer Mobilvorrichtung, wobei das Steuerverfahren Folgendes umfasst:
Aufnehmen mit einer Kamera eines Bildes eines Bildschirms einer gesteuerten Vorrichtung, die einen Bildschirm besitzt, der ein Bild anzeigt;
Anzeigen auf einer Anzeigeeinheit der Mobilvorrichtung des Bildes, das von dem Bildschirm der gesteuerten Vorrichtung aufgenommen worden ist;
Empfangen einer Berührungseingabe eines Anwenders auf der Anzeigeeinheit; und
Bestimmen eines Bereichs des Bildschirms der gesteuerten Vorrichtung aus dem aufgenommenen Bild, wobei das Verfahren **gekennzeichnet ist durch** den folgenden Schritt: Senden zu der gesteuerten Vorrichtung von Ortsinformationen, die der Berührungseingabe des Anwenders auf dem auf der Anzeigeeinheit angezeigten Bereich des Bildschirms entsprechen.

9. Steuerverfahren nach Anspruch 8, wobei das Bestimmen das Bestimmen des Bereichs des Bildschirms anhand einer Markierung, die in der gesteuerten Vorrichtung bereitgestellt wird, umfasst.

10. Steuerverfahren nach Anspruch 8 oder 9, wobei das Bestimmen das Bestimmen des Bereichs des Bildschirms durch Ausführen einer Bilderkennung in Bezug auf das aufgenommene Bild umfasst.

11. Steuerverfahren nach einem der Ansprüche 8 bis 10, wobei das Bestimmen das Bestimmen des Bereichs des Bildschirms anhand des relativen Ortes der gesteuerten Vorrichtung unter Verwendung eines von der gesteuerten Vorrichtung empfangenen Synchronisationssignals umfasst.

12. Steuerverfahren nach einem der Ansprüche 8 bis 11, wobei die Ortsinformationen, die der Berührungseingabe des Anwenders entsprechen, Koordinateninformationen eines Ortes, der der Berührungseingabe eines Anwenders in Bezug auf eine vorgegebene Referenzstelle des Bereichs in dem Bildschirm entspricht, enthalten.

13. Steuerverfahren nach einem der Ansprüche 8 bis 12, das ferner das Anzeigen einer Anwenderschnittstelle (UI) auf der Anzeigeeinheit, die einen Ort identifiziert, der der Berührungseingabe des Anwenders entspricht, umfasst.

14. Steuerverfahren nach einem der Ansprüche 8 bis 13, wobei das Aufnehmen des Bildes das Einstellen eines Winkels und/oder Zooms der Kamera, um den Bereich des Bildschirms anzuzeigen, umfasst.

## Revendications

1. Dispositif mobile comprenant :
une unité de communication qui communique avec un dispositif commandé disposant d'un écran qui affiche une image ;
une caméra qui capture une image de l'écran du dispositif commandé ;
une unité d'affichage qui affiche ladite image capturée à partir de l'écran du dispositif commandé ;
une unité d'entrée tactile qui reçoit une entrée tactile d'utilisateur sur l'unité d'affichage ; et
un contrôleur qui détermine une zone de l'écran du dispositif commandé à partir de ladite image capturée, le dispositif mobile étant **caractérisé en ce que** ledit contrôleur transmet au dispositif commandé les informations d'emplacement sur ledit écran qui correspondent à l'entrée tactile de l'utilisateur sur la zone de l'écran affichée sur ladite unité d'affichage.

2. Dispositif mobile selon la revendication 1, dans lequel le contrôleur détermine la zone de l'écran sur la base d'un marqueur qui est pourvu dans le dispositif commandé.

3. Dispositif mobile selon la revendication 1 ou la revendication 2, dans lequel le contrôleur détermine la zone de l'écran en effectuant une reconnaissance d'image par rapport à l'image capturée.

4. Dispositif mobile selon l'une des revendications 1 à 3, dans lequel l'unité de communication reçoit un signal de synchronisation à partir du dispositif commandé, et le contrôleur utilise le signal de synchronisation reçu pour déterminer la zone de l'écran sur la base d'un emplacement relatif du dispositif contrôlé.

5. Dispositif mobile selon l'une des revendications 1 à 4, dans lequel les informations d'emplacement qui correspondent à l'entrée tactile de l'utilisateur comprennent des informations de coordonnées d'un emplacement qui correspond à l'entrée tactile de l'utilisateur par rapport à un point de référence prédéterminé dans la zone de l'écran.

6. Dispositif mobile selon l'une des revendications 1 à 5, dans lequel le contrôleur affiche une interface utilisateur (UI) sur l'unité d'affichage qui identifie un emplacement qui correspond à l'entrée tactile de l'utilisateur.

7. Dispositif mobile selon l'une des revendications 1 à 6, dans lequel le contrôleur ajuste au moins un paramètre parmi un angle et un facteur de grossissement de la caméra pour afficher la zone de l'écran lorsqu'une image est capturée à partir de l'écran.

8. Procédé de commande d'un dispositif mobile, le procédé de commande comprenant les étapes suivantes :
capturer une image avec une caméra d'un écran d'un dispositif commandé disposant d'un écran qui affiche une image ;
afficher sur une unité d'affichage dudit dispositif mobile l'image capturée à partir de l'écran du dispositif commandé ;
recevoir une entrée tactile d'utilisateur sur ladite unité d'affichage ; et
déterminer une zone de l'écran du dispositif commandé à partir de ladite image capturée, le procédé étant **caractérisé par** l'étape suivante : transmettre au dispositif commandé des informations d'emplacement qui correspondent à l'entrée tactile de l'utilisateur sur la zone de l'écran affichée sur ladite unité d'affichage.

9. Procédé de commande selon la revendication 8, dans lequel la détermination comprend de déterminer la zone de l'écran sur la base d'un marqueur qui est pourvu dans le dispositif commandé.

10. Procédé de contrôle selon la revendication 8 ou la revendication 9, dans lequel la détermination comprend de déterminer la zone de l'écran en effectuant une reconnaissance d'image par rapport à l'image capturée.

11. Procédé de commande selon l'une des revendications 8 à 10, dans lequel la détermination comprend de déterminer la zone de l'écran sur la base d'un emplacement relatif du dispositif commandé en utilisant un signal de synchronisation reçu du dispositif commandé.

12. Procédé de commande selon l'une des revendications 8 à 11, dans lequel les informations d'emplacement qui correspondent à l'entrée tactile de l'utilisateur comprennent des informations de coordonnées d'un emplacement qui correspond à l'entrée tactile de l'utilisateur en un point de référence prédéterminé de la zone dans l'écran.

13. Procédé de commande selon l'une des revendications 8 à 12, comprenant en outre d'afficher une interface utilisateur (UI) sur l'unité d'affichage qui identifie un emplacement qui correspond à l'entrée tactile de l'utilisateur.

14. Procédé de commande selon l'une des revendications 8 à 13, dans lequel la capture de l'image comprend d'ajuster au moins un paramètre parmi un angle et un facteur de grossissement de la caméra pour afficher la zone de l'écran.
